# EUROPEAN PATENT APPLICATION

(11) **EP 2 211 170 A1**
(43) Date of publication of application: **28.07.2010**
(21) Application number: 08845327.9
(22) Date of filing: 31.10.2008
(51) Int. Cl.: G01N 27/28, G01N 27/327, G01N 27/416

(54) **ANALYSIS TOOL, ANALYZER, SAMPLE SHORTAGE DETECTION METHOD, AND SAMPLE ANALYSIS METHOD**

(30) Priority: 31.10.2007 JP 2007282783
(71) Applicant: ARKRAY, Inc., Minami-ku Kyoto-shi Kyoto 601-8045 (JP)
(72) Inventor: SATO, Yoshiharu, Kyoto-Shi Kyoto 601-8045 (JP); FUJII, Tomohiro, Kyoto-Shi Kyoto 601-8045 (JP)
(74) Representative: HOFFMANN EITLE
(86) International application number: PCT/JP2008/069983
(87) International publication number: WO 2009/057793

(57) **Abstract**

There is provided an analysis tool (1) having a plurality of electrodes (14 to 17) formed on a substrate (10). The plurality electrodes (14 to 17) include two or more first electrodes (14, 15) having working electrodes (14W, 15W) and one or more second electrodes (16, 17) having counter electrodes (16C, 17C). The analysis tool (1) may also additionally have a flow channel (13) for transferring a sample. The electrodes (14 to 17) are preferably disposed so that the working electrodes (14W, 15W) and the counter electrodes (16C, 17C) have a symmetrical positional relationship with each other in a transferring direction (D1, D2) of the sample in the flow channel (13).

## Description

### Technical Field

The present invention relates to a technology for detecting whether or not a sample supplied to an analysis tool is insufficient when the sample is analyzed using the analysis tool.

### Background Art

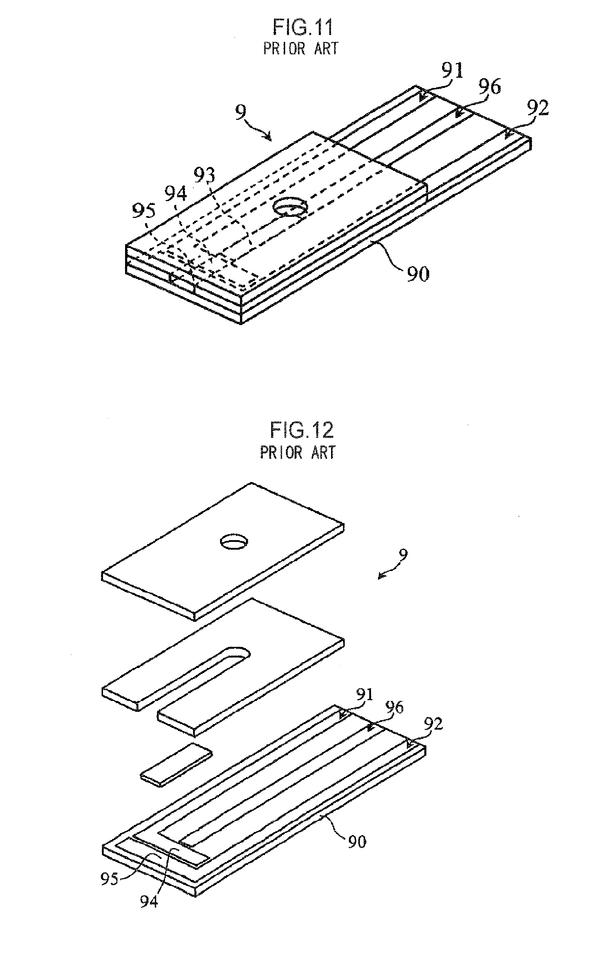

When the glucose concentration within blood is measured, a method of using a disposable analysis tool is being employed as a simple and easy technique. The analysis tool includes, for example, an electrode-type biosensor 9 shown in Figs. 11 and 12 (for example, refer to Patent Citation 1). The biosensor 9 has electrodes 91 and 92 provided on the substrate 90 and a flow channel 93 for transferring the sample such as blood.

The electrode 91 has an working electrode 94 for performing transfer of electrons to/from a certain component within blood and a counter electrode 95 for generating an electric potential difference between the electrode 92 and the working electrode 94. The working electrode 94 and the counter electrode 95 are exposed in the flow channel 93.

In such a biosensor 9, when a voltage is applied between the working electrode 94 and the counter electrode 95, a response electric current is output in response to a concentration of a certain component within the sample. Therefore, in the biosensor 9, it is possible to measure the glucose concentration or the like by measuring the response electric current using the working electrode 94 (electrode 91) and the counter electrode 95 (electrode 92).

The biosensor 9 is provided with a detection electrode 96 for detecting whether or not the sample is appropriately supplied in addition to the electrodes 91 and 92 for analyzing blood. In such a biosensor 9, it is determined that a sufficient amount of the sample such as blood has been supplied to the flow channel 93 when it is identified that a liquid junction is formed between the detection electrode 96 and the first electrode 92 or the second electrode 93.

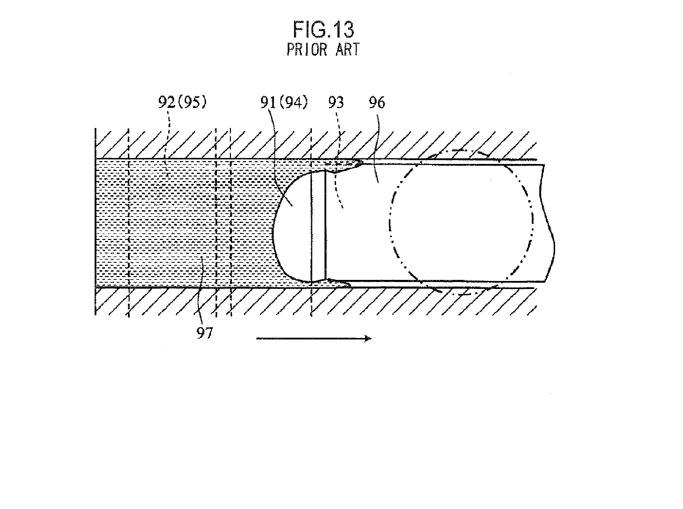

However, as shown in Fig. 13, even when a liquid junction is formed between the detection electrode 96 and the electrode 91 (working electrode 94) or the electrode 92 (counter electrode 95), the flow channel 93 may not be completely filled with the sample 97, and only a part of the working electrode 94 may make contact with the sample 97. In such a state that the sample 97 is insufficient, the measurement response electric current is reduced in contrast to the case where the flow channel 93 is substantially completely filled with the sample. As a result, measurement values such as blood-sugar level may be lowered, and measurement accuracy may be degraded.

[Patent Citation 1] Japanese Patent Application Laid-Open (JP-A) No. 6-109688

### Disclosure of the Invention

### Problem to be solved by the Invention

The present invention has been made to appropriately detect whether or not the sample supplied to the analysis tool is short when the sample is analyzed using the analysis tool.

### Technical Solution

According to a first aspect of the present invention, there is provided an analysis tool including: a substrate; and plural electrodes formed on the substrate, wherein the plural electrodes include two or more first electrodes having an working electrode and one or more second electrodes having a counter electrode.

The analysis tool according to the present invention may further include a flow channel for transferring the sample. In this case, it is preferable that the plural electrodes are arranged such that the working electrode and the counter electrode have a symmetrical positional relationship in the movement direction of the sample in the flow channel.

The number of the one or more second electrodes is equal to the number of the two or more first electrodes. When the number of each of first and second electrodes is 2, plural electrodes may be arranged side by side in the order of the counter electrode, the working electrode, the working electrode, and the counter electrode in the movement direction, or in the order of the working electrode, the counter electrode, the counter electrode, and the working electrode.

In addition, the plural electrodes may include two first electrodes and one second electrode. In this case, for example, the electrodes are arranged side by side in the order of the working electrode, the counter electrode, and the working electrode with respect to the movement direction.

According to a second aspect of the present invention, there is provided an analyzer for performing analysis of a sample using an analysis tool, the analysis tool having first and second working electrodes and one or more counter electrodes, the analyzer including: an electric current measurement means for detecting a response electric current when a voltage is applied between first and second working electrodes and the counter electrode; a detection means for detecting shortage of the sample supplied to the analysis tool by comparing a first response electric current obtained when a voltage is applied between the first working electrode and the counter electrode and a second response electric current obtained when a voltage is applied between the second working electrode and the counter electrode; and an analysis means for performing analysis of the sample based on at least one of the first and second response electric currents.

According to a third aspect of the present invention, there is provided a method of detecting whether or not the sample supplied to an analysis tool is insufficient when the sample is analyzed using the analysis tool, the analysis tool having first and second working electrodes and one or more counter electrode, wherein it is determined whether or not the amount of sample supplied to the analysis tool is insufficient by comparing a first response electric current obtained when a voltage is applied between the first working electrode and the one or more counter electrodes and a second response electric current obtained when a voltage is applied between the second working electrode and the one or more counter electrode.

In the detection method according to the present invention, for example, it is determined that the sample supplied to the analysis tool is insufficient when the difference between the first and second response electric currents is not within a predetermined range.

For example, the one or more counter electrodes include first and second counter electrodes. In this case, the first response electric current is measured when a voltage is applied between the first working electrode and the first counter electrode, and the second response electric current is measured when a voltage is applied between the second working electrode and the second counter electrode.

For example, the analysis tool has a flow channel for moving the sample, and the first and second working electrodes and the one or more counter electrodes are arranged symmetrically in a movement direction of the sample.

According to a fourth aspect of the present invention, there is provided a method of supplying a sample and analyzing a sample using an analysis tool, the analysis tool having first and second working electrodes and one or more counter electrodes, wherein shortage of the sample supplied to the analysis tool is detected by comparing a first response electric current obtained when a voltage is applied between the first working electrode and the one or more counter electrodes and a second response electric current obtained when a voltage is applied between the second working electrode and the one or more counter electrodes, and the sample is analyzed based on at least one of the first and second response electric currents.

### Brief Description of Drawings

[Fig. 1] Fig. 1 is a perspective diagram illustrating the entire biosensor according to a first embodiment of the present invention.
[Fig. 2] Fig. 2 is a cross-sectional view along the line II-II of Fig. 1.
[Fig. 3] Fig. 3 is an exploded perspective diagram illustrating the biosensor of Fig. 1.
[Fig. 4] Fig. 4 is a top plan view illustrating the biosensor of Fig. 1 by removing the reagent layer and cover.
[Fig. 5] Fig. 5 is a block diagram for describing the analysis tool according to the present invention.
[Fig. 6] Figs. 6A to 6C are partially cross-sectional views illustrating a sample supply state in the capillary.
[Fig. 7] Figs. 7A and 7B are top plan views corresponding to Fig. 4 for describing another example of the biosensor.
[Fig. 8] Fig. 8 is a perspective diagram illustrating the entire biosensor according to a second embodiment of the present invention.
[Fig. 9] Fig. 9 is an exploded perspective diagram illustrating the biosensor of Fig. 8.
[Fig. 10] Figs. 10A and 10B are graphs illustrating measurement results for the response electric current in Example 1.
[Fig. 11] Fig. 11 is a perspective diagram illustrating the entire biosensor corresponding to an exemplary analysis tool of the related art.
[Fig. 12] Fig. 12 is an exploded perspective diagram illustrating the biosensor of Fig. 11.
[Fig. 13] Fig. 13 is a partially cross-sectional view illustrating a sample shortage state in the flow channel of the biosensor of Fig. 11.

### Explanation of References

- 1, 4:: BIOSENSOR (ANALYSIS TOOL)
- 10, 40:: SUBSTRATE (OF BIOSENSOR)
- 13,43:: FLOW CHANNEL
- 14, 15, 44, 45:: ELECTRODE (FIRST ELECTRODE)
- 14W, 15W, 14W', 15W', 14W", 15W", 44W, 45W:: WORKING ELECTRODE
- 16, 17, 46, 47:: ELECTRODE (SECOND ELECTRODE)
- 16C, 16C', 16C", 17C, 46C, 47C:: COUNTER ELECTRODE
- 2:: ANALYZER
- 21:: VOLTAGE APPLICATION UNIT
- 22A, 22B:: ELECTRIC CURRENT MEASUREMENT UNIT
- 24:: DETECTION UNIT
- D1, D2:: WIDTH DIRECTION OF SUBSTRATE (MOVEMENT DIRECTION OF SAMPLE)

### Best Mode for Carrying out the Invention

Hereinafter, the present invention is described below in detail with reference to the accompanying drawings.

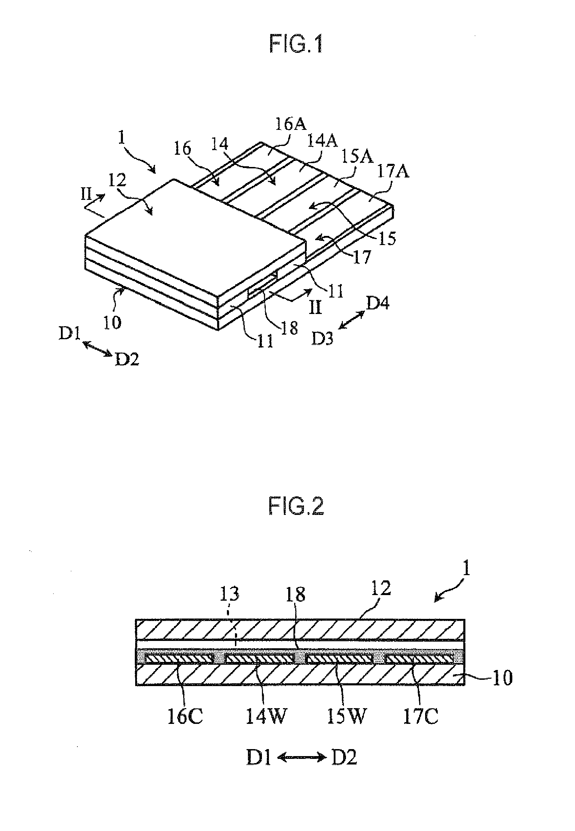

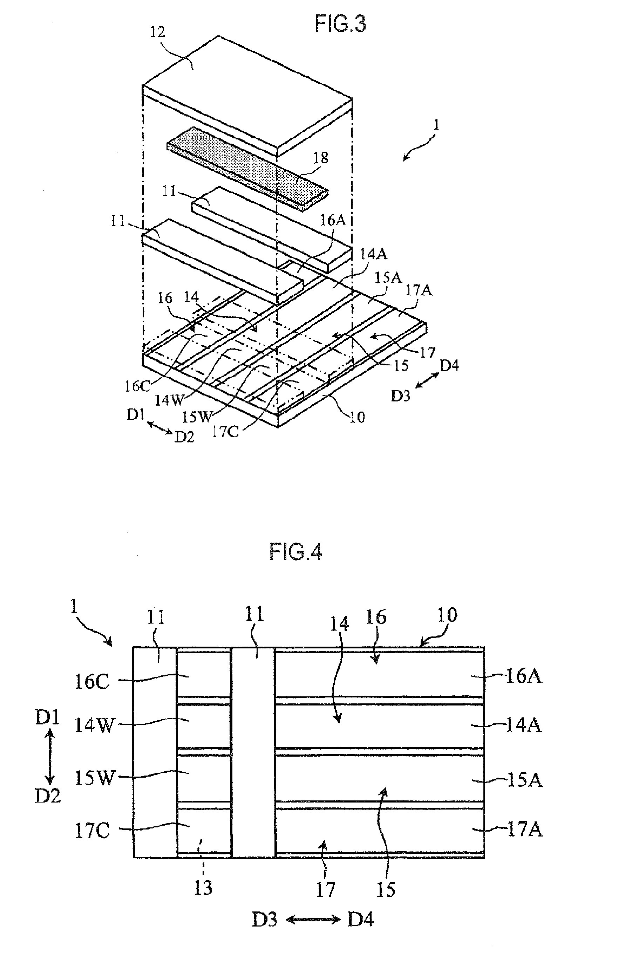

First, a first embodiment of the present invention is described with reference to Figs. 1 to 7.

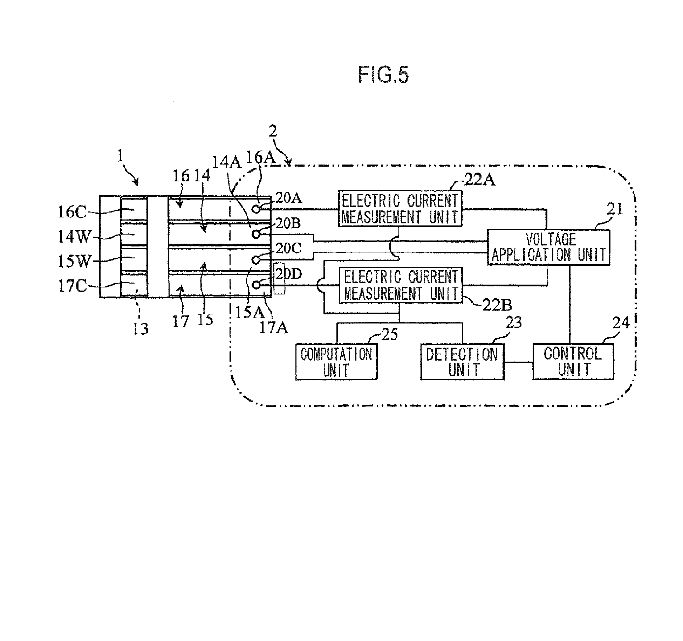

The biosensor 1 shown in Figs. 1 to 4 is formed as a disposable device installed in an analyzer (refer to Fig. 5) such as a concentration measurement apparatus, which is described below, and used to analyze a certain component (for example, glucose, cholesterol, or lactic acid) within a sample (for example, a biochemical sample such as blood or urine). This biosensor 1 has a configuration obtained by bonding the cover 12 to the substrate 10 having an approximately long rectangular shape by interposing a pair of spacers 11 therebetween.
In the biosensor 1, a capillary 13 extending in a width direction D1 and D2 of the substrate 10 is defined by each element 10 to 12.

The substrate 10 is formed in a shape larger than the cover 12 using an insulation resin material such as PET, and has electrodes 14, 15, 16, and 17 and a reagent layer 18 formed on the surface thereof.

The electrodes 14 to 17 are formed to have a band shape extending in a longitudinal direction D3 and D4 of the substrate 10 and having substantially the same width. These electrodes 14 to 17 have terminal sections 14A, 15A, 16A, and 17A exposed in a lateral direction of the cover 12. The terminal sections 14A to 17A are to make contact with the first to fourth terminals 20A to 20D of the analyzer 2 when the biosensor 1 is installed in the analyzer 2 as described below with reference to Fig. 5.

The electrodes 14 and 15 further have working electrodes 14W and 15W for performing transfer of electrons to/from a certain component within the sample. Meanwhile, the electrodes 16 and 17 have counter electrodes 16C and 17C for generating an electric potential difference from the working electrodes 14W and 15W. The working electrodes 14W and 15W and the counter electrodes 16C and 17C are arranged side by side in the order of the counter electrode 17C, the working electrode 15W, the working electrode 14W, and the counter electrode 16C in the direction D1 inside the capillary 13.

These electrodes 14 to 17 may be formed by CVD, sputtering, or deposition using gold, platinum, palladium, nickel, or the like, or by forming a conductive film through a screen printing using carbon inks and then irradiating laser light to provide a slit.

The reagent layer 18 is provided to cover the working electrodes 14W and 15W and the counter electrodes 16C and 17C in series inside the capillary 13. This reagent layer 18 includes, for example, an oxidoreductase and an electron carrier material, and is formed in a solid state that can be readily dissolved in a liquid sample such as blood.

The oxidoreductase is selected depending on the type of the analysis target component within the sample. For example, when glucose is analyzed, glucose oxidase (GOD) or glucose dehydrogenase (GDH) may be used, and typically, PQQGDH is used.
The electron carrier material may include, for example, a ruthenium complex or an iron complex, and typically [Ru(NH₃)₆]Cl₃ or K₃[Fe(CN)₆].

A pair of spacers 11 are provided to define a distance from the surface of the substrate 10 to the lower surface of the cover 12, i.e., the height of the capillary 13, and are configured of, for example, a double-face adhesive tape or a hot-melt film. The spacers 11 extend in a width direction D1 and D2 of the substrate 10 and are also arranged to be separated in a longitudinal direction D3 and D4 of the substrate 10. In other words, the pair of spacers 11 define the width of the capillary 13 and the area (the contact area making contact with the sample) of the portion exposed within the capillary 13 (the working electrodes 14W and 15W and the counter electrodes 16C and 17C) in the electrodes 14 to 17. In addition, since the electrodes 14 to 17 have substantially the same width, the areas of the working electrodes 14W and 15W and the counter electrodes 16C and 17C are set to be substantially the same. Here, the areas are referred as being substantially the same considering the irregularity of the area caused by a manufacturing error or the like.

The cover 12 is to define the capillary 13 in association with the spacers 11 or the like. This cover 12 is formed af the same material as that of the substrate 10 such as PET or thermoplastic resin having a high wettability such as vinylon or high-crystalline PVA.

The capillary 13 is to move the introduced sample such as blood in a width direction D 1 and D2 of the substrate 10 using a capillary action and maintain the introduced sample.

In other words, in the capillary 13, when the sample is introduced, the sample moves while discharging gas within the capillary 13. In this case, inside the capillary 13, the reagent layer 18 is dissolved so as to provide a liquid-phase reaction system including certain elements such as an oxidoreductase, an electron carrier material, and glucose.

The analyzer 2 shown in Fig. 5 is to measure a concentration of a certain component within the reagent solution using the biosensor 1. This analyzer 2 includes first to fourth terminals 20A, 20B, 20C, and 20D, a voltage application unit 21, electric current measurement units 22A and 22B, a detection unit 23, a control unit 24, and a computation unit 25.

First to fourth terminals 20A to 20D are to make contact with the terminal sections 14A to 17A of the electrodes 14 to 17 of the biosensor 1 when the biosensor 1 is installed in the analyzer 2.

The voltage application unit 21 is to apply a voltage between the terminal sections 14A to 17A of the biosensor 1 through the first to fourth terminals 20A to 20D. This voltage application unit 21 is configured of, for example, a direct current power source.

The electric current measurement unit 22A is to measure a first response electric current when a voltage is applied between the terminals 14A and 16A (between the working electrode 14W and the counter electrode 16C) of the biosensor 1 by the voltage application unit 21. The electric current measurement unit 22B is to measure a second response electric current when a voltage is applied between the terminal sections 15A and 17A (between the working electrode 15W and the counter electrode 17C) of the biosensor 1 from the voltage application unit 21.

The detection unit 23 is to detect whether or not the sample is supplied to the capillary 13 of the biosensor 1 based on the first and second electric currents measured by the electric current measurement unit 22A and 22B after the biosensor 1 is installed in the analyzer 2.

The control unit 24 is to control the voltage application unit 21 and a voltage state applied between the working electrodes 14W and 15W and the counter electrodes 16C and 17C.

The computation unit 25 computes a concentration of a certain component within the reagent solution or a correction value required in this computation in response to at least one of the first and second response electric current values measured by the electric current measurement units 22A and 22B. The computation unit 25 has, for example, a timer function and stores a concentration of a certain component and a response electric current (or an equivalent value (for example, a voltage value) corresponding to the response electric current) to compute the concentration of a certain component based on the response electric current after a predetermined time, for example, from starting applying the voltage.

While each of the detection unit 23, the control unit 24, and the computation unit 25 includes, for example, a CPU and memory (such as ROM or RAM), all of the detection unit 23, the control unit 24, and the computation unit 25 may be configured by connecting plural memory devices to a single CPU.

Next, a method of analyzing the sample using the biosensor 1 and the analyzer 2 is described below.

In the sample analysis, first, the biosensor 1 is installed in the analyzer 2, and the sample such as blood is introduced from the end portion of the capillary 13 of the biosensor 1 into the inner side of the capillary 13. Since both ends of the capillary 13 are opened at the outer side of the analyzer 2 when the biosensor 1 is installed in the analyzer 2, the sample can be introduced from either end. The sample introduced into the capillary 13 is moved into the direction D1 or D2 within the capillary 13.

Meanwhile, the analyzer 2 applies a voltage between the electrodes 14 to 17 by controlling the voltage application unit 21 using the control unit 24 and measures the response electric current at that moment using the electric current measurement units 22A and 22B. The voltage value applied by the voltage application unit 21 is set to, for example, a constant voltage of about 200 mV. The voltage is continuously applied to the electrodes 14 to 17 before the sample is introduced into the capillary 13. Applying the voltage may be stopped only for a predetermined time (for example, 0.5 to 60 seconds) after a liquid junction between the working electrodes 14W and 15W and the counter electrodes 16C and 17C is identified, and then the voltage may again be applied to the electrodes 14 to 17.

The detection unit 23 compares first and second response electric currents measured by the electric current measurement units 22A and 22B after a predetermined time (for example, 5 seconds) is elapsed from starting applying the voltage between the electrodes 14 to 17. In this case, it is determined whether or not the difference between the first and second response electric currents is within a predetermined range. Here, the predetermined range is determined arbitrarily, but may be appropriately set depending on the size of the capillary 13, the areas of the working electrodes 14W and 15W, a composition of the reagent layer 18, the type of the analysis component, the magnitude of the applied voltage, or the like.

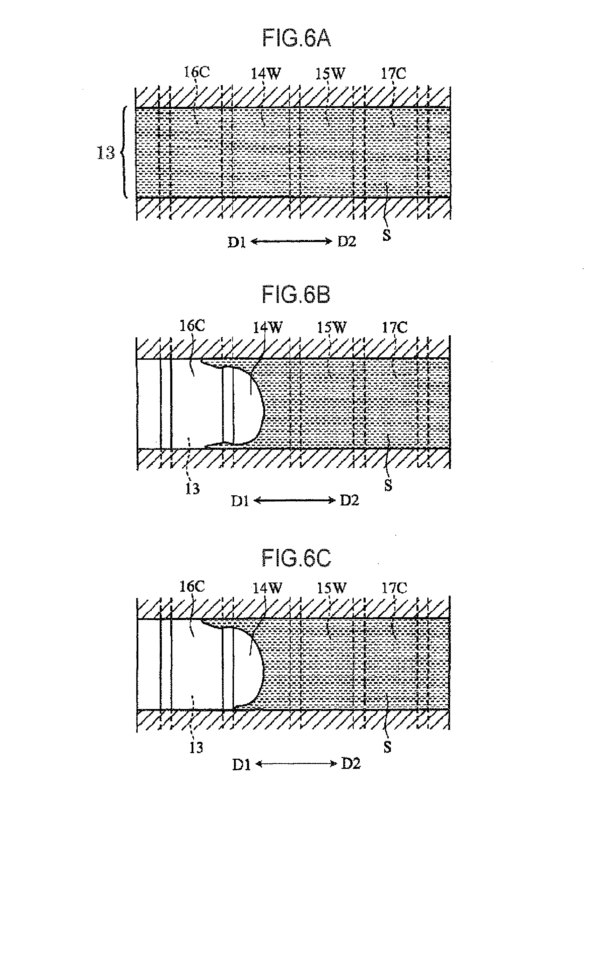

When it is determined by the detection unit 23 that the difference between the first and second response electric currents is within a predetermined range, the detection unit 23 determines that an amount of the sample sufficient to analyze the sample is supplied to the capillary 13. When the difference between the first and second response electric currents is within a predetermined range, it means that a liquid junction state between the working electrode 14W and the counter electrode 16C is approximately the same as a liquid junction state between the working electrode 15W and the counter electrode 17C as shown in Fig. 6A, and the contact areas making contact with the sample S in both the working electrode 14W and 15W within the capillary 13 are substantially the same. Therefore, when the difference between the first and second response electric currents is within a predetermined range, it can be determined that an amount of the sample S sufficient to analyze the sample S is supplied to the capillary 13. Here, the amount sufficient to analyze the sample S means the amount for allowing substantially the entire areas of both the working electrodes 14W and 15W to make contact with the sample S, and is not limited to the case where the capillary 13 is fully filled.

Meanwhile, in the detection unit 23, when it is determined that the difference between the first and second response electric currents is not within a predetermined range, the detection unit 23 determines that the amount of the sample S sufficient to analyzes the sample S is not supplied to the capillary 13. When the difference between the first and second response electric currents is not within a predetermined range, a liquid junction state between the working electrode 14W and the counter electrode 16C is different from a liquid junction state between the working electrode 15W and the counter electrode 17C as shown in Figs. 6B and 6C, and the contact areas making contact with the sample S are different between the working electrodes 14W and 15W in the capillary 13. Therefore, when the difference between the first and second response electric currents is not within a predetermined range, it can be determined that the amount of the sample sufficient to analyze the sample S is not supplied to the capillary 13.

In the detection unit 23, when it is determined that the difference between the first and second response electric currents is not within a predetermined range, it is determined that an amount of the sample sufficient to perform the analysis is not supplied to the capillary 13 (the sample is insufficient), and an error process for the sample shortage is performed. The detection unit 23 re-compares the first and second response electric currents and re-detects whether or not the sample is insufficient after it is determined that the difference between the first and second response electric currents is not within a predetermined range after a predetermined time has elapsed.

On the contrary, in the detection unit 23, when it is determined that the difference between the first and second response electric currents is within a predetermined range, it can be determined that the amount of the sample sufficient to perform the analysis is supplied to the capillary 13. Therefore, the analysis of a certain component within the sample is performed.

The analysis of a certain component within the sample is performed based on the first and second response electric currents when a voltage is applied by the voltage application unit 21 between the electrodes 14 to 17. More specifically, first, the computation unit 25 samples the first and second response electric currents measured by the electric current measurement units 22A and 22B after the sample is detected, or the voltage is re-applied, and then, a predetermined time is elapsed. Next, the computation unit 25 computes the concentration of a certain component by applying at least one of the first and second response electric currents to a calibration curve or a reference table representing a relationship between the concentration of a certain component and the response electric current value.

Here, when the analysis is based on both the first and second response electric currents, for example, an average value or an integration value of the first and second response electric currents is employed.

As described above, in the analysis of the sample using the biosensor 1 and the analyzer 2, the shortage of the sample is detected based on two working electrodes 14W and 15W lined in the movement direction D1 and D2 of the sample. Therefore, as long as each of the working electrodes 14W and 15W does not appropriately make contact with the sample, it is determined that the sample supplied to the capillary 13 is insufficient. Therefore, when it is determined that the sample sufficient to perform the analysis is supplied, each of the working electrodes 14W and 15W makes contact with the sample over substantially the entire area thereof. As a result, it is possible to prevent the analysis of the sample from being performed without considering the shortage of the sample supplied to the capillary 13, and improve the measurement accuracy.

In addition, since the working electrodes 14W and 15W and the counter electrodes 16C and 17C are arranged side by side symmetrically in the movement direction D1 and D2 of the sample, the shortage of the sample is detected in the same condition even when the sample is supplied to either end of the capillary 13. Therefore, it is possible to appropriately detect the supply shortage of the sample irrespective of the introduction direction of the sample into the capillary 13.

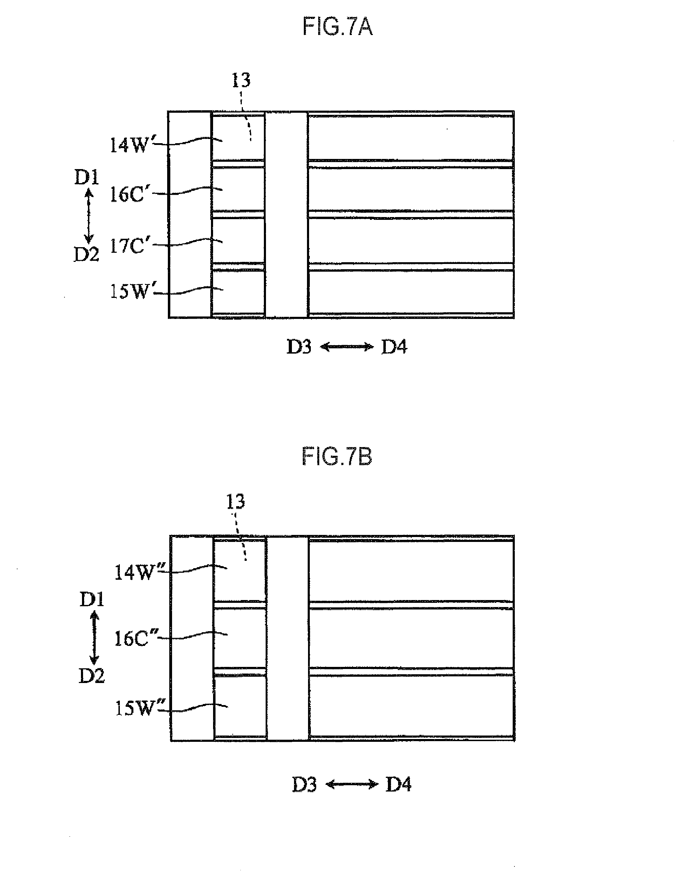

The present invention is not limited to the aforementioned embodiments, but may be variously changed. For example, the arrangement or the number of the working electrodes and the counter electrodes may have the configurations shown in Figs. 7A and 7B.

In the example shown in Fig. 7A, in the movement direction D1 and D2 of the sample within the capillary 13, the working electrodes 14W' and 15W' are arranged in the side close to the end of the capillary 13, and the counter electrodes 16C' and 17C' are arranged in the center portion of the capillary 13. In other words, the working electrodes 14W' and 16W' and the counter electrodes 15C' and 17C' are symmetrically arranged side by side in the movement direction D1 and D2 of the sample.

In the example shown in Fig. 7B, two working electrodes 14W" and 15W" and a single counter electrode 16C" are provided. The working electrode 14W", the counter electrode 16C", and the working electrode 15W" are arranged side by side in this order in the direction D1 and symmetrically in the movement direction D1 and D2 of the sample.

Also in the example shown in Figs. 7A and 7B, since two working electrodes 14W' and 15W' (14W" and 15W") are provided, it is possible to prevent the analysis of the sample from being performed without considering the shortage of the sample supplied to the capillary 13, and improve the measurement accuracy.

In addition, since the working electrodes 14W' and 15W' (14W" and 15W") and the counter electrodes 16C' and 17C' (16C") are arranged side by side symmetrically in the movement direction D1 and D2 of the sample, it is possible to appropriately detect the supply shortage of the sample irrespective of the introduction direction of the sample into the capillary 13.

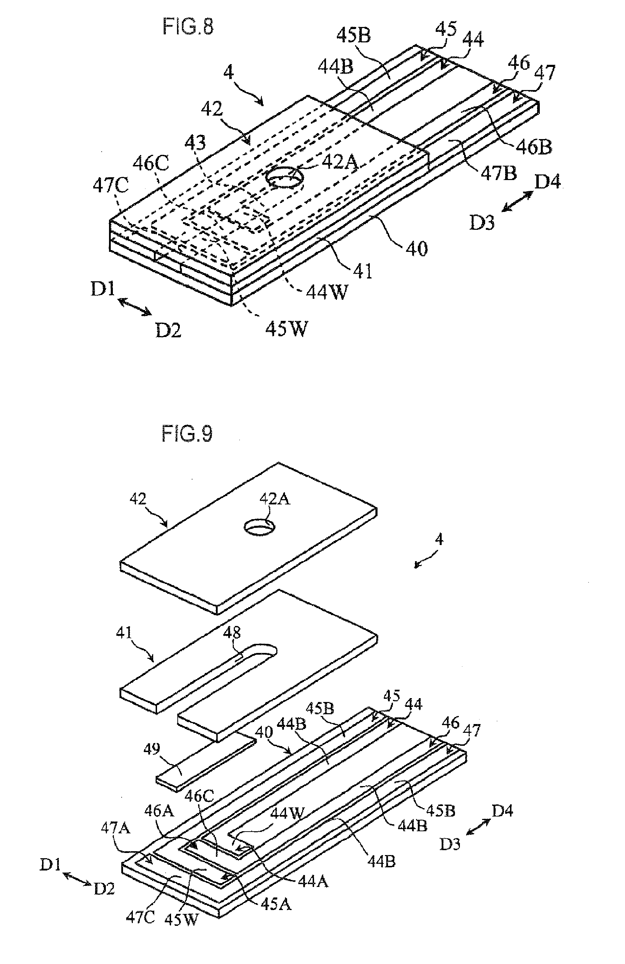

Next, the second embodiment of the present invention is described below with reference to Figs. 8 and 9.

Similar to the biosensor 1 described above (refer to Figs. 1 to 4), the biosensor 4 shown in Figs. 8 and 9 is formed by stacking the substrate 40, the spacer 41, and the cover 42, and the capillary 43 is defined by these components.

Electrodes 44, 45, 46, and 47 are formed on the substrate 40. The electrodes 44 to 47 have curved portions 44A, 45A, 46A, and 47A extending in the directions of D1 and D2 and lead portions 44B, 45B, 46B, and 47B extending in directions of D3 and D4. The curved portions 44A to 47A are arranged side by side in the directions of D3 and D4, and include the working electrodes 44W and 45W and the counter electrodes 46C and 47C defined by the spacer 41.

Inside the capillary 43, the working electrodes 44W and 45W and the counter electrodes 46C and 47C are arranged side by side in the order of the counter electrode 47C, the working electrode 45W, the counter electrode 46C, and the working electrode 44W in the direction D4.

The spacer 41 is to define a distance from the upper surface of the substrate 40 to the lower surface of the cover 42, i.e., the height of the capillary 43, and has a slit 48. The slit 48 defines the width of the capillary 48 for introducing the sample and the area of the portion (including the working electrodes 44W and 45W and the counter electrodes 46C and 47C) exposed inside the capillary 43 in the electrodes 44 to 47.

Here, the capillary 43 is to move the introduced sample such as blood in the direction D4 using a capillary action and retain the introduced sample. In the inner side thereof, the reagent layer 49 is formed to cover at least the working electrodes 44W and 45W. Such a spacer 41 is configured of, for example, a double-face adhesive tape or a hot-melt film.

The cover 42 is to define the capillary 43 in association with the spacer 41 or the like, and has a through-hole 42A for discharging the gas inside the capillary 43. The cover 42 is formed of the same material as that of the substrate 40, such as thermoplastic resin or PET having a high wettability such as vinylon or high-crystalline PVA.

In the biosensor 4, similar to the biosensor 1 (refer to Figs. 1 to 4) described above, it is possible to detect the shortage of the sample based on two working electrodes 44W and 45W arranged side by side in the movement direction D4 of the sample. Therefore, it is possible to prevent the analysis of the sample from being performed without considering the shortage of the sample supplied to the capillary 43, and improve the measurement accuracy.

Also in the biosensor 4 shown in Figs. 8 and 9, the arrangement and the number of the working electrode and the counter electrode may be changed in design.

Next, examples of the present invention is described.

### EXAMPLE 1

In this example, whether or not the shortage of the sample can be detected in the biosensor according to the present invention was reviewed.

### (Process of Manufacturing Biosensor)

A biosensor having the same configuration as that of the biosensor 1 described with reference to Figs. 1 to 4 was manufactured. The electrode of the biosensor was formed by sputtering nickel as the conductive layer on a PET substrate and preparing a slit using a laser oscillator. The target areas of the working electrode and the counter electrode were set to 0.7 mm². The reagent layer containing [Ru(NH₃)Cl₃] of 20 µg as an electron carrier material and glucose oxidase of 1 Unit as the oxidoreductase for a single sensor was formed to cover the working electrode and the counter electrode. The size of the capillary was set to have a width of 1.4 mm, a length of 5.1 mm, and a height of 0.1 mm.

### (Measurement of Response Electric Current)

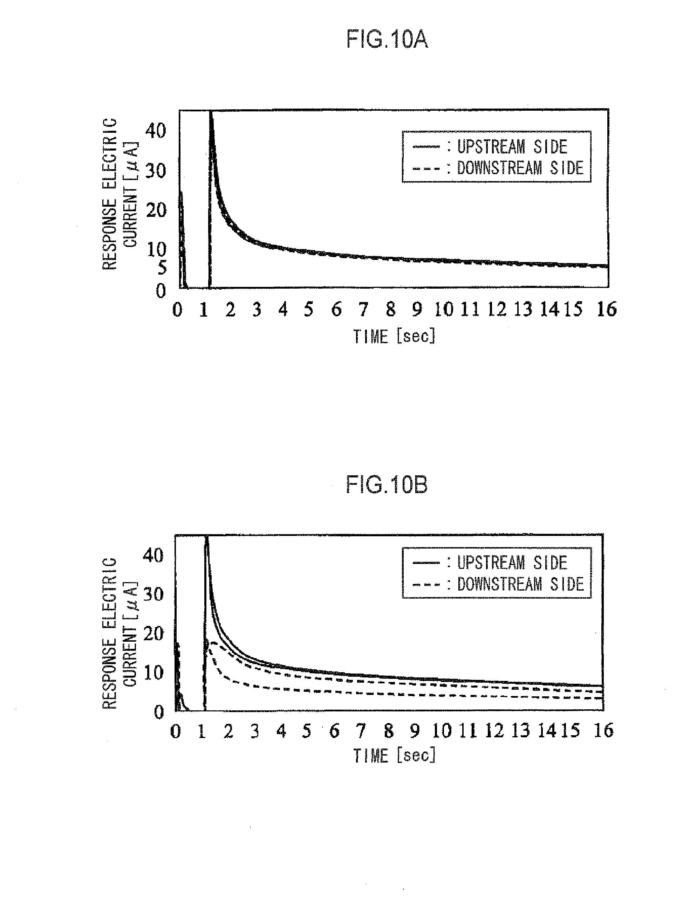

The response electric current was measured using the electric current meter by applying a constant DC voltage of 200 mV between the working electrode and the counter electrode after 1 second from detecting the liquid junction by setting, to 0 second, a timing when the sample is supplied to the capillary, and then, a liquid junction is detected between the working electrode and the counter electrode. As the sample, a glucose solution having the glucose concentration of 600 mg/dL was used. As the measurement result for the response electric current, the result (the sample number N = 2) obtained when a glucose solution having an amount sufficient to fill the capillary is supplied is represented in Fig. 10A and Table 1, and the result (the sample number N = 2) obtained when a glucose solution having an amount (approximately 60% of the capillary volume) insufficient to fill the capillary is supplied is represented in Fig. 10B and Table 2. In Figs. 10A and 10B, a solid line denotes a time course of the response electric current when a voltage is applied between a pair of the working electrode and the counter electrode in a sample introducing side (the upstream side of the movement direction of the sample) of the capillary, and a dashed line denotes a time course of the response electric current when a voltage is applied between a pair of the working electrode and the counter electrode in the downstream side of the sample introducing direction in the capillary.

**[Table 1]**

| | RESPONSE ELECTRIC CURRENT VALUE OF 4 sec (µA) | | RESPONSE ELECTRIC CURRENT VALUE OF 5 sec (µA) | |
|---|---|---|---|---|
| | SENSOR 1 | SENSOR 2 | SENSOR 1 | SENSOR 2 |
| PAIR OF UPSTREAM SIDE | 8.77 | 8.48 | 8.30 | 8.03 |
| PAIR OF DOWNSTREAM SIDE | 8.57 | 8.75 | 8.11 1 | 8.20 |

**[Table 2]**

| | RESPONSE ELECTRIC CURRENT VALUE OF 4 sec (µA) | | RESPONSE ELECTRIC CURRENT VALUE OF 5 sec (µA) | |
|---|---|---|---|---|
| | SENSOR 1 | SENSOR 2 | SENSOR 1 | SENSOR 2 |
| PAIR OF UPSTREAM SIDE | 9.98 | 9.60 | 9.39 | 9.13 |
| PAIR OF DOWNSTREAM SIDE | 8.42 | 4.88 | 7.82 | 4.59 |

As recognized from Fig. 10A, for each of three samples, the difference of the magnitude of the time course of the response electric current value is not significant between a pair of the working electrode and the counter electrode in the upstream side and a pair of the working electrode and the counter electrode in the downstream side of the sample flowing direction. In addition, as recognized from Table 1, in a pair of the working electrode and the counter electrode in the upstream side, the difference of the response electric currents measured 4 seconds later (5 seconds in the abscissa of Fig. 10A) and 5 seconds later (6 seconds in the abscissa of Fig. 10A) after re-applying a voltage between the working electrode and the counter electrode is relatively small.

Meanwhile, as recognized from Fig. 10B, for each of two samples, the difference of the magnitude of the time course of the response electric current value is relatively large between a pair of the working electrode and the counter electrode in the upstream side and a pair of the working electrode and the counter electrode in the downstream side of a sample flowing direction. In addition, as recognized from Table 2, in a pair of the working electrode and the counter electrode in the upstream side, the difference of the response electric currents measured 4 seconds later (5 seconds in the abscissa of Fig. 10B) and 5 seconds later (6 seconds in the abscissa of Fig. 10B) after re-applying a voltage between the working electrode and the counter electrode is significant.

Therefore, it was verified that it is possible to detect a supply shortage of the sample within the capillary by measuring the response electric currents using two working electrodes and comparing those response electric currents.

## Claims

1. An analysis tool comprising:
a substrate; and
a plurality of electrodes formed on the substrate,
wherein the plurality of electrodes comprises at least two first electrodes each having a working electrode and at least one second electrode having a counter electrode.

2. The analysis tool of claim 1 further comprising a flow channel for transferring a sample, wherein the plurality of electrodes are arranged so that the working electrode and the counter electrode have a symmetrical positional relationship in a movement direction of the sample in the flow channel.

3. The analysis tool of claim 2, wherein the number of the at least one second electrode is equal to the number of the at least two first electrodes.

4. The analysis tool of claim 3, wherein the plurality of electrodes are arranged side by side in the order of: a counter electrode, a working electrode, another working electrode, and another counter electrode, with respect to the movement direction.

5. The analysis tool of claim 3, wherein the plurality of electrodes are arranged side by side in the order of: a working electrode, a counter electrode, another counter electrode, and another working electrode, with respect to the movement direction.

6. The analysis tool of claim 2, wherein the plurality of electrodes are arranged side by side in the order of: a working electrode, a counter electrode, and another working electrode, with respect to the movement direction.

7. The analysis tool of claim 1, wherein each of the working electrodes of the at least two first electrodes has substantially the same surface area.

8. An analyzer for performing analysis of a sample using an analysis tool, the analysis tool having first and second working electrodes and at least one counter electrode, the analyzer comprising:
an electric current measurement component that measures a response electric current when a voltage is applied between the first and second working electrodes and the at least one counter electrode;
a detection component that detects a shortage of the sample supplied to the analysis tool by comparing a first response electric current, obtained when a voltage is applied between the first working electrode and the counter electrode, with a second response electric current, obtained when a voltage is applied between the second working electrode and the counter electrode; and
an analysis component that performs analysis of the sample based on at least one of the first or second response electric currents.

9. A method of detecting whether or not there is a shortage of a sample supplied to an analysis tool when the sample is analyzed using the analysis tool, the analysis tool having first and second working electrodes and at least one counter electrode, the method of detecting comprising:
comparing a first response electric current, obtained when a voltage is applied between the first working electrode and the at least one counter electrode, with a second response electric current, obtained when a voltage is applied between the second working electrode and the at least one counter electrode; and
determining whether or not there is a shortage of the amount of the sample supplied to the analysis tool.

10. The method of claim 9, wherein it is determined that there is a shortage of the sample supplied to the analysis tool when a difference between the first and second response electric currents is not within a predetermined range.

11. The method of claim 9, wherein the at least one counter electrode comprises a first counter electrode and a second counter electrode, the first response electric current being measured when a voltage is applied between the first working electrode and the first counter electrode, and the second response electric current being measured when a voltage is applied between the second working electrode and the second counter electrode.

12. The method of claim 9, wherein the analysis tool has a flow channel for transferring the sample, and the first and second working electrodes and the at least one counter electrode are arranged symmetrically in a movement direction of the sample.

13. The analysis tool of claim 9, wherein each of the first and second working electrodes has substantially the same area.

14. A method of analyzing a sample using an analysis tool, the analysis tool having first and second working electrodes and at least one counter electrode, the method comprising:
detecting a shortage of the sample, which is supplied to the analysis tool, by comparing a first response electric current, obtained when a voltage is applied between the first working electrode and the at least one counter electrodes, with a second response electric current, obtained when a voltage is applied between the second working electrode and the at least one counter electrode; and
analyzing the sample is analyzed based on at least one of the first or second response electric currents.
